# EUROPÄISCHE PATENTANMELDUNG

(11) **EP 1 723 879 A2**
(43) Veröffentlichungstag der Anmeldung: **22.11.2006**
(21) Anmeldenummer: 06003227.3
(22) Anmeldetag: 17.02.2006
(51) Int. Cl.: A47C 31/02, B60N 2/58

(54) **Einlegeteil zum Einschäumen in Schaumstoff- Polsterteile, vorzugsweise von Fahrzeug-oder Flugzeugsitzen**

(30) Priorität: 19.05.2005 DE 102005022957
(71) Anmelder: Gottlieb Binder GmbH & Co. KG, 71088 Holzgerlingen (DE)
(72) Erfinder: Poulakis, Konstantinos, Dr., 71157 Hildrizhausen (DE)
(74) Vertreter: Bartels & Partner

(57) **Zusammenfassung**

Bei einem Einlegeteil zum Einschäumen in Schaumstoff-Polsterteile, vorzugsweise von Fahrzeug- oder Flugzeugsitzen, das zumindest ein linienförmiges Festlegeelement (11) aufweist, das, teilweise im Schaummaterial festgelegt und teilweise von diesem freigehalten, dem Angriff von Verankerungselementen für die Lagesicherung von Bezugsmaterialien dient, besteht das Festlegeelement (11) aus einem Kunststoffmaterial (13, 17), das ferromagnetische Eigenschaften aufweist oder ferromagnetische Anteile beinhaltet, oder das Festlegeelement (11) weist eine innere Seele (15) mit ferromagnetischen Eigenschaften auf, die von einer Kunststoffhülle (13) zumindest teilweise umfaßt ist.

## Beschreibung

Die Erfindung bezieht sich auf ein Einlegeteil zum Einschäumen in Schaumstoff-Polsterteile, vorzugsweise von Fahrzeug- oder Flugzeugsitzen, das zumindest ein linienförmiges Festlegeelement aufweist, das, teilweise im Schaummaterial festgelegt und teilweise von diesem freigehalten, dem Angriff von Verankerungselementen für die Lagesicherung von Bezugsmaterialien dient.

Bei Sitzen, insbesondere solchen, die zur Personenbeförderung in Kraftfahrzeugen oder Flugzeugen vorgesehen sind, finden für Sitzkomponenten wie Sitzteil und/oder Rückenlehne und/oder Kopfstütze vielfach Polsterteile Anwendung, bei denen als Polsterkern ein Schaumstoff-Formkörper vorgesehen ist, beispielsweise aus Polyurethan. Um gute Gebrauchseigenschaften des Sitzes zu gewährleisten, ist es äußerst wichtig, dass das jeweilige Bezugsmaterial, das als Einfassung am Schaumstoff-Polsterteil anzubringen ist und das die äußere, als Anlehn- oder Abstützfläche für Körperteile des Sitzbenutzers dienende äußere Oberfläche des Polsterteiles bildet, in geeigneter Weise verankert ist. Hierzu benutzte Befestigungssysteme müssen gewährleisten, dass eine sichere Verankerung des Bezugsmaterials auch bei wechselnden und starken, durch Körperteile des Sitzbenutzers ausgeübten Belastungen aufrecht erhalten bleibt. Bekannte Befestigungsysteme werden dieser Anforderung nicht in ausreichendem Maße gerecht. Eine bekannte Lösung sieht hierfür vor, dass bei dem in der betreffenden Schäumform erfolgenden Formvorgang entlang gewünschter Abheftlinien, an denen das Bezugsmaterial mit dem Polsterteil verheftet werden soll, Festlegeelemente in das Polsterteil eingeschäumt werden, wobei beispielsweise Haftverschlussstreifen in die Schäumform eingelegt werden und deren zugeordnete Formwände so gestaltet sind, dass die Haftverschlussstreifen in die Abheftlinien bildende Nuten vertieft eingeschäumt werden. Eine weitere bekannte Lösung, vgl. DE 39 06 200 A1, sieht die Anbringung von am Bezugsmaterial festgelegten Haltestreifen mit Widerhaken vor, die mit einer am Polsterteil befestigten, speziell ausgebildeten Klammerleiste zusammenwirken, die die Widerhaken hintergreifen.

Die zuerst genannte bekannte Lösung mit eingeschäumten Haftverschlußelementen ist in zweierlei Hinsicht unbefriedigend. Zum einen muss in nachteiliger Weise eine aufwendig gestaltete Schäumform verwendet werden, um die Haftverschlussstreifen für den Schäumvorgang in der Schäumform in richtig eingelegter Lage zu sichern, wobei die Schäumform gleichzeitig so gestaltet sein muss, dass die Verhakungselemente der Haftverschlussstreifen vor dem Zutritt von Schaummaterial geschützt sind. Zweitens bietet diese Lösung keine ausreichend feste Verankerung, die auch sehr hohen örtlichen Sitzbelastungen standhalten könnte. Andererseits ist die aus der DE 39 06 200 A1 offenbarte Lösung mit speziell geformten Klammerleisten am Polsterteil und hierzu passend am Bezugsmaterial anzubringenden Haltestreifen mit Widerhaken in nachteiliger Weise besonders aufwändig.

Um die vorstehend genannten Unzulänglichkeiten zu vermeiden ist es auch bekannt, als linienförmiges Festlegeelement einen Haltedraht in das Schaummaterial des Polsterteiles einzuschäumen, wobei der Haltedraht längs der Abheftlinien so eingeschäumt wird, dass der Haltedraht abschnittweise vom Schaummaterial frei ist und in diesen Abschnitten für den Angriff von Verankerungsmitteln am Bezugsmaterial zur Verfügung steht. Zwar ist bei einer solchen Lösung eine einfache magnetische Fixierung eines gegebenenfalls ferromagnetischen Haltedrahtes in der Schäumform möglich, so dass die Schäumform vergleichsweise konstruktiv einfach gestaltet werden kann. Um jedoch sicher zu stellen, dass der Haltedraht in dem zwischen den freiliegenden Abschnitten befindlichen, in das Schaummaterial eingeschäumten Längenabschnitten durch das Schaummaterial so sicher gehalten wird, dass bei den in Frage kommenden Belastungen ein Ausreißen des Drahtes aus dem Schaummaterial vermieden ist, kann lediglich ein Haltedraht mit verhältnismäßig großem Durchmesser benutzt werden. Wie sich gezeigt hat, besteht nämlich die Gefahr, dass ein dünner Haltedraht bei Belastungen als Schneidedraht wirkt und das Schaummaterial durchschneidet. Wird ein Haltedraht ausreichend großen Durchmessers benutzt, ergeben sich die Nachteile hohen Gewichtes, entsprechend hoher Materialkosten und des erschwerten Einbaues in die Schäumform aufgrund der bei hohem Drahtquerschnitt erhöhten Steifigkeit.

Ausgehend von diesem Stand der Technik stellt sich die Erfindung die Aufgabe, ein Einlegeteil zur Verfügung zu stellen, das die vorstehend erwähnten Probleme überwindet.

Erfindungsgemäß löst diese Aufgabe ein Einlegeteil, das die Merkmale des Patentanspruches 1 in seiner Gesamtheit aufweist.

Dadurch, dass gemäß dem kennzeichnenden Teil das Festlegeelement hauptsächlich aus einem Kunststoffmaterial besteht, kann dem Festlegeelement, ohne die oben erwähnten, bei Benutzung eines Haltedrahtes auftretenden Nachteile in Kauf nehmen zu müssen, ein so großer Außendurchmesser gegeben werden, dass an der Außenseite des Festlegeelementes eine so große, vom Schaummaterial umfasste Oberfläche zur Verfügung gestellt wird, dass eine besonders hohe Sicherheit gegen Ausreißen aus dem Schaummaterial gewährleistet ist. Dadurch, dass außerdem ein Kunststoffmaterial mit ferromagnetischen Eigenschaften vorgesehen ist oder das Kunststoffmaterial ferromagnetische Anteile beinhaltet, ergeben sich hinsichtlich der magnetischen Lagesicherung in der Schäumform die gleichen Vorteile, wie sie bei Benutzung des bekannten Haltedrahtes diesbezüglich gegeben sind, wobei dessen erwähnte Nachteile jedoch nicht in Kauf genommen werden müssen.

Vorzugsweise weist das Festlegeelement die Form eines biegsamen Kunststoffstabes, vorzugsweise mit runder Querschnittsform, auf. Hierbei kann der Stab ferromagnetische Bestandteile enthalten, beispielsweise Ferritpartikel, oder kann mit einer ferromagnetischen Beschichtung versehen sein.

Als alternatives Beispiel kann das Festlegeelement einen Kunststoffschlauch aufweisen, der eine zumindest nahezu geschlossene Ummantelung der die ferromagnetischen Eigenschaften aufweisenden inneren Seele bildet.

Bei einem solchen Ausführungsbeispiel kann das Festlegeleement in der Art eines mit einer Kunststoffisolation ummantelten elektrischen Leiterdrahtes gestaltet sein, also eines elektrischen Einfachkabels, wobei an Stelle des normalerweise den Leiter bildenden Kupferdrahtes ein ferromagnetischer Draht vorgesehen ist.

Jedoch kann als eine innerhalb des Kunststoffschlauches befindliche Seele an Stelle eines normalen Drahtes auch eine Substanz enthalten sein, die ferromagnetische Bestandteile, beispielsweise in Partikelform, enthält.

Alternativ kann die Seele durch einen innerhalb des Kunststoffschlauches enthaltenden Kunststoffstrang mit ferromagnetischen Eigenschaften gebildet sein.

Nachstehend ist die Erfindung anhand von in der Zeichnung dargestellten Ausführungsbeispielen im Einzelnen erläutert. Es zeigen:
- Fig. 1 eine den Stand der Technik erläuternde, perspektivisch und abgebrochen gezeichnete Ansicht nur des oberen Endbereiches des Schaumstoff-Polsterteiles für eine Sitz-Rückenlehne mit angeformtem Kopfpolsterteil, wobei das Bezugsmaterial weggelassen ist und ein üblicher, eingeschäumter Haltedraht für Verankerungselemente teilweise sichtbar ist;
- Fig. 2 eine perspektivische Ansicht eines Festlegeelementes gemäß einem Ausführungsbeispiel des Einlegeteiles der vorliegenden Erfindung;
- Fig. 3 eine der Fig. 2 ähnliche perspektivische Ansicht eines weiteren Ausführungsbeispieles und
- Fig. 4 eine der Fig.2 ähnliche perspektivische Ansicht eines weiteren Ausführungsbeispiels.

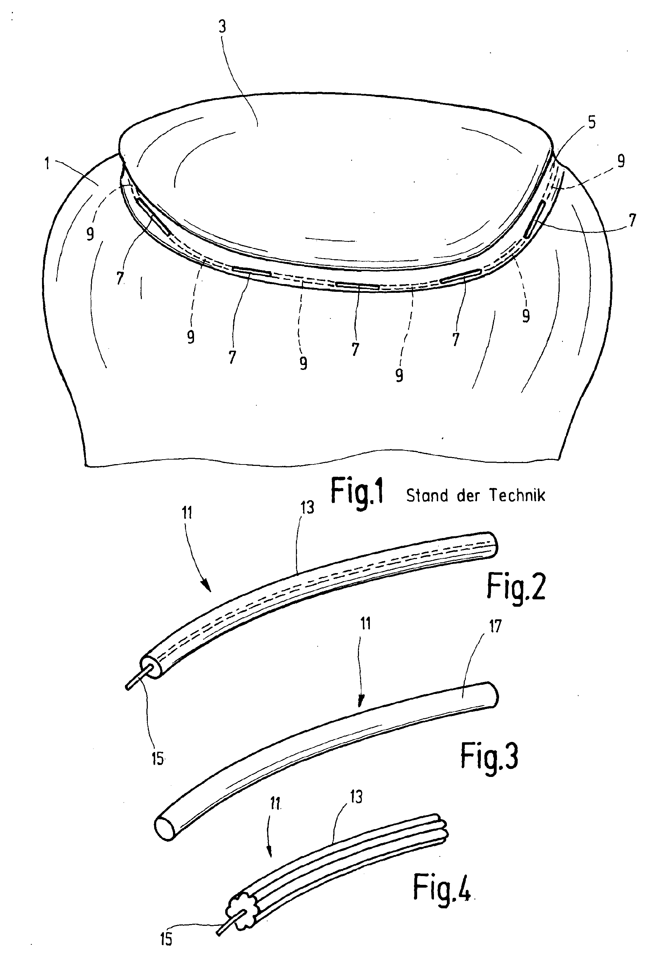

In Fig. 1 ist ein den Polsterkörper oder ―kern aus Polyurethanschaum bildendes Polsterteil mit 1 bezeichnet, an dessen oberem Endbereich ein Kopfpolsterteil 3 einstückig ausgebildet ist. Entsprechend dem Stand der Technik ist bei dem Schäumvorgang, bei dem das Polsterteil 1 zusammen mit dem Kopfpolsterteil 3 mittels einer Schäumform aus Polyurethanschaum geformt wird, zwischen Polsterteil 1 und Kopfpolsterteil 3 eine kanalartige Nut 5 gebildet, die eine Abheftlinie bildet, entlang deren ein nicht gezeigtes Bezugsmaterial entlang des Kopfpolsterteiles 3 abzuheften, d. h. zu befestigen ist. Zu diesem Zweck ist innerhalb der Nut 5 ein Festlegeelement in Form eines üblichen Haltedrahtes so eingeschäumt, dass Drahtabschnitte 7 von Schaummaterial freigehalten sind, die sich mit eingeschäumten Längenabschnitten 9 abwechseln.

Wie bereits erwähnt, eröffnet sich bei Benutzung eines Haltedrahtes, in dem ein ferromagnetischer Draht, beispielsweise Stahldraht, benutzt wird, die Möglichkeit, Magneteinlegeteile in der betreffenden Schäumform vorzusehen, so dass der Haltedraht für den Schäumvorgang in der Form entsprechend positioniert und fixiert ist. Wie ebenfalls erwähnt muss jedoch der Durchmesser des Haltedrahtes so groß gewählt sein, dass in den eingeschäumten Längenabschnitten 9 ausreichend Oberfläche, die vom Schaummaterial umschäumt ist, zur Verfügung steht, um ein Ausreißen des Haltedrahtes zu vermeiden.

Fig. 2 zeigt ein Ausführungsbeispiel für ein als erfindungsgemäßes Einlegeteil an Stelle des üblichen Haltedrahtes zu benutzendes Festlegeelement 11, wobei dieses einen Kunststoffschlauch 13 aufweist, der als innere Seele einen durchgehenden ferromagnetischen Draht 15 enthält. Diese Ausbildung des Festlegeelementes 11 eröffnet die Möglichkeit, den Außendurchmesser durch entsprechende Dimensionierung des Kunststoffschlauches 13 so groß zu wählen, dass die geforderte Sicherheit der Verankerung im Schaummaterial der Polsterteile 1 und 3 gewährleistet ist, ohne dass dadurch die Nachteile des hohen Gewichtes und der erhöhten Steifigkeit in Kauf genommen werden müßten, wie dies beim Stand der Technik bei einer Vergrößerung des Durchmessers des Haltedrahtes der Fall ist.

In Fig. 2 ist dargestellt, dass sich der die Seele bildende ferromagnetische Draht 15 durchgehend über die Länge des Schlauches 13 erstreckt. Bei solcher Ausbildung kann das Festlegeelement 11 die Zusatzfunktion eines isolierten elektrischen Leiters übernehmen, wobei der Draht 15 den elektrischen Leiter bildet, so dass das Festlegeelement 11 auch als Bestandteil elektrischer Zusatzeinrichtungen des Sitzes benutzbar ist, beispielsweise für Audiosysteme, Ventilationseinrichtungen am Rückenlehnen- oder Kopfpolsterbereich und dergleichen. Jedoch braucht der Draht 15 innerhalb des Schlauches 13 nicht durchgehend zu sein. Es genügt, dass sich der Draht 15 über solche Längenabschnitte erstreckt, in denen in der betreffenden Schäumform Magneteinlegeteile vorhanden sind. Außerdem könnte an Stelle einer durch den Draht 15 gebildeten Seele eine innerhalb des Kunststoffschlauches 13 befindliche Substanz vorgesehen sein, die ferromagnetische Bestandteile enthält, beispielsweise in Partikelform.

Fig. 3 zeigt ein weiteres Beispiel, bei dem das Festlegeelement durch einen Stab 17 aus einem ausreichend biegsamen Kunststoff gebildet ist. Hierbei kann es sich um einen Stab aus einem ferrogmanetische Bestandteile enthaltenden Kunststoff handeln oder um einen Kunststoffstab, der mit einer ferromagnetischen Beschichtung versehen ist. Auch bei diesem Ausführungsbeispiel ist der Außendurchmesser des Stabes 17 so groß wählbar, dass die erforderliche Sicherheit gegen Ausreißen aus dem Schaummaterial gewährleistet ist.

Wie bei der Benutzung eines üblichen Haltedrahtes können auch bei Verwendung eines Festlegeelementes 11, wie es als erfindungsgemässes Einlegeteil vorgesehen ist, als Verankerungselemente Halteklammern für das Bezugsmaterial vorgesehen sein, die das Festlegeelement 11 hintergreifen. Beim Einschäumen des Ferstlegeelementes 11 kann auf dieses vor dem Einlegen in die Schäumform in den vom Schaummaterial freizuhaltenden Längenabschnitten 7 eine schaumabweisende Beschichtung aufgebracht, beispielsweise aufgesprüht werden, etwa ein Sol-Gel der in der EP 1 082 031 B1 offenbarten Art.

Fig.4 zeigt eine weitere geänderte Ausführungsform der erfindungsgemäßen Lösung. Die Kunststoffhülle 13 ist diesmal mit einer Struktur versehen, um dergestalt deren wirksame Oberfläche für die anstehenden Adhäsionsvorgänge mit dem Schaum zu verbessern. Bei der Ausführungsform nach der Fig.4 ist die Hülle 13 im Querschnitt mit konvexen Vorwölbungen versehen, die sich entlang von Verbindungslinien benachbart treffen. Andere nicht näher dargestellte Strukturierungen wären denkbar, beispielsweise in Form von konkaven Eindrücken in der Hüllenoberfläche. Bei den gezeigten Ausführungsformen nach den Fig.2 und 4 wird bildlich der Eindruck erweckt, dass die Hülle 13 den Draht 15 vollflächig umschließt; vorzugsweise bildet jedoch die jeweilige Hülle 13 eine Art Hohlzylinder aus, in dessen Hohlöffnung der Draht 15 entlang von vorgebbaren Wegstrecken frei bewegbar ist, was die Anpassungsmöglichkeiten für das Festlegeelement 11 im Schaummaterial eines Polsters erhöht.

## Patentansprüche

1. Einlegeteil zum Einschäumen in Schaumstoff-Polsterteile (1, 3), vorzugsweise von Fahrzeug- oder Flugzeugsitzen, das zumindest ein linienförmiges Festlegeelement (11) aufweist, das, teilweise im Schaummaterial festgelegt und teilweise von diesem freigehalten, dem Angriff von Verankerungselementen für die Lagesicherung von Bezugsmaterialien dient, **dadurch gekennzeichnet, dass** das Festlegeelement (11) aus einem Kunststoffmaterial (13, 17) besteht, das ferromagnetische Eigenschaften aufweist oder ferromagnetische Anteile beinhaltet, oder dass das Festlegeelement (11) eine innere Seele (15) mit ferromagnetischen Eigenschaften aufweist, die von einer Kunststoffhülle (13) zumindest teilweise umfaßt ist.

2. Einlegeteil nach Anspruch 1, **dadurch gekennzeichnet, dass** das Festlegeelement (11) die Form eines biegsamen Kunststoffstabes (17), vorzugsweise mit runder Querschnittsform, besitzt.

3. Einlegeteil nach Anspruch 2, **dadurch gekennzeichnet, dass** als Festlegeelement (11) ein biegsamer Stab (17) aus einem ferromagnetische Bestandteile enthaltenden oder mit ferromagnetischer Beschichtung versehenen Kunststoff vorgesehen ist.

4. Einlegeteil nach Anspruch 2, **dadurch gekennzeichnet, dass** das Festlegeelement (11) einen Kunststoffschlauch (13) aufweist, der eine zumindest nahezu geschlossene Ummantelung der die ferromagnetischen Eigenschaften aufweisenden inneren Seele (15) bildet.

5. Einlegeteil nach Anspruch 4, **dadurch gekennzeichnet, dass** die Seele durch einen ferromagnetischen Draht (15) gebildet ist.

6. Einlegeteil nach Anspruch 4, **dadurch gekennzeichnet, dass** die Seele durch eine innerhalb des Kunststoffschlauches befindliche, ferromagnetische Bestandteile enthaltende Substanz gebildet ist.

7. Einlegeteil nach einem der Ansprüche 2 bis 6, **dadurch gekennzeichnet, dass** das Festlegeelement (11) für den Angriff von es hintergreifenden, klammerartigen Verankerungselementen eine Folge von sich abwechselnden von Schaummaterial freigehaltenen Längenabschnitten (7) aufweist, die voneinander durch jeweils im Schaummaterial festgelegte Längenabschnitte (9) voneinander getrennt sind.

8. Einlegeteil nach Anspruch 7, **dadurch gekennzeichnet, dass** die von Schaummaterial freigehaltenen und die im Schaummaterial festgelegten Längenabschnitte (7 und 9) des Festlegeelements (11) jeweils näherungsweise die gleiche Länge besitzen.

9. Einlegeteil nach Anspruch 7 oder 8, **dadurch gekennzeichnet, dass** das Festlegeelement (11) in den vom Schaummaterial freigehaltenen Längenabschnitten (7) mit einer schaumabweisenden Beschichtung versehen ist.

10. Einlegeteil nach einem der Ansprüche 1 bis 9, **dadurch gekennzeichnet, dass** die Kunststoffhülle (13) zur Erhöhung ihrer wirksamen Oberfläche strukturiert ist.
